(19) Europäisches Patentamt
European Patent Office
Office européen des brevets

(11) Veröffentlichungsnummer: **0 313 953 B1**

(12) **EUROPÄISCHE PATENTSCHRIFT**

(45) Veröffentlichungstag der Patentschrift: **03.06.92**

(51) Int. Cl.5: **H04L 7/02**

(21) Anmeldenummer: **88117258.9**

(22) Anmeldetag: **17.10.88**

(54) **Verfahren und Anordnung zur Erzeugung eines Korrektursignals in einer digitalen Taktrückgewinnungseinrichtung.**

(30) Priorität: **27.10.87 DE 3736351**

(43) Veröffentlichungstag der Anmeldung:
**03.05.89 Patentblatt 89/18**

(45) Bekanntmachung des Hinweises auf die Patenterteilung:
**03.06.92 Patentblatt 92/23**

(84) Benannte Vertragsstaaten:
**AT BE CH DE ES FR GB GR IT LI NL SE**

(56) Entgegenhaltungen:
**DE-B- 2 641 547**
**FR-A- 2 230 129**
**NL-A- 8 301 625**
**US-A- 3 582 789**

**IBM TECHNICAL DISCLOSURE BULLETIN,
Band 29, Nr. 2, Juli 1986, Seiten 903-904, New
York, US; "Clock recovery circuit based on
preset counter"**

(73) Patentinhaber: **SIEMENS AKTIENGESELL-
SCHAFT**
**Wittelsbacherplatz 2**
**W-8000 München 2(DE)**

(72) Erfinder: **Sarközi, Imre, Dipl.-Ing.**
**Karl-Witthalm-Strasse 42**
**W-8000 München 70(DE)**

## Beschreibung

Die Erfindung bezieht sich auf ein Verfahren und eine Anordnung zur Erzeugung eines Korrektursignals bei Erreichung eines definierten Phasenabstandes zwischen einem Digitalsignal und einem ersten Datenhilfstakt, der eine sich mit dem Phasenabstand ändernde Auswahl eines von mehreren Hilfstakten darstellt, die untereinander einen gleichen Phasenabstand haben.

Dieses Verfahren und diese Anordnung ist Gegenstand eines älteren Vorschlags (Europäische Patentanmeldung EP 0 275 406 A1, 27.11.86). Nach diesem werden mehrere gegeneinander um gleiche Werte in der Phase verschobene Hilfstakte gleicher Frequenz erzeugt, die etwas vom Nominalwert der Taktfrequenz des Digitalsignals abweicht. Diese Hilfstakte werden einer Phasenkorrektureinrichtung zugeführt, die einen von ihnen als rückgewonnenen Takt des Digitalsignals mit der Bezeichnung Datenhilfstakt abgibt. Ein Phasensensor mißt den Abstand der als wirksam ausgewählten Flanken des Digitalsignals und des Datenhilfstakts und veranlaßt bei Unterschreiten eines definierten Minimalabstands mittels des Korrektursignals eine Phasenkorrektur in der Phasenkorrektureinrichtung derart, daß sich der meßbare Abstand über den definierten Minimalwert vergrößert. Von einem Quarzoszillator abgesehen läßt sich diese Anordnung in einer integrierten Schaltung realisieren. Dieser Quarzoszillator kann auch mehrere derartige integrierte Schaltungen speisen.

Aus der US-Patentschrift 3 582 789 ist eine Anordnung zum Empfang asynchroner Datensignale bekannt. Diese enthält vier eingangsseitig parallelgeschaltete Kanaleinheiten, die von einem Taktgenerator mit Takten versorgt werden, die sich in der Phase jeweils um 90° unterscheiden. Die Einschaltung jeweils der Kanaleinheit, deren Taktphase am besten zur Taktphase des empfangenen asynchronen Datensignals paßt, erfolgt nicht mittels eines für alle Kanaleinheiten aus einer Quelle stammenden Korrektursignals.

Der das Korrektursignal erzeugende Phasensensor nach dem älteren Vorschlag enthält eine Verzögerungseinrichtung, die mit der geforderten Genauigkeit ihrer Verzögerungszeit in integrierter Schaltungstechnik schwer realisierbar ist.

Aufgabe der Erfindung ist es, ein Verfahren anzugeben, mit dem das Korrektursignal in einer integrierten Schaltung erzeugt werden kann.

Diese Aufgabe wird mit den Merkmalen des Anspruchs 1 gelöst. Eine Anordnung zur Durchführung des erfindungsgemäßen Verfahrens enthält die Merkmale des Anspruchs 4. Die weiteren Ansprüche betreffen Ausgestaltungen des Verfahrens oder der Anordnung.

Das erfindungsgemäße Verfahren läßt sich in integrierter Schaltkreistechnik realisieren und insbesondere für Bitraten gleich oder größer 34 Mbit/s verwenden.

Anhand von Ausführungsbeispielen wird die Erfindung nachstehend näher erläutert:

Fig. 1　zeigt ein Blockschaltbild einer Taktrückgewinnungseinrichtung nach dem Stand der Technik,

Fig. 2　zeigt ein Blockschaltbild der erfindungsgemäßen Taktrückgewinnungseinrichtung,

Fig. 3　zeigt eine Phasenkorrektureinrichtung,

Fig. 4　zeigt einen ersten elektronischen Umschalter,

Fig. 5　zeigt einen Pulsplan zum Umschalter nach Fig. 4,

Fig. 6　zeigt einen zweiten elektronischen Umschalter,

Fig. 7　zeigt ein D-Flip-Flop mit Testeingängen,

Fig. 8　zeigt einen Pulsplan zum Umschalter nach Fig. 6,

Fig. 9　zeigt einen weiteren Pulsplan,

Fig. 10　zeigt das Blockschaltbild eines Phasensensors,

Fig. 11　zeigt einen Pulsplan zum Phasensensor nach Fig. 10,

Fig. 12　zeigt einen Korrektursignalerzeuger und

Fig. 13　zeigt einen Pulsplan zum Korrektursignalerzeuger nach Fig. 12.

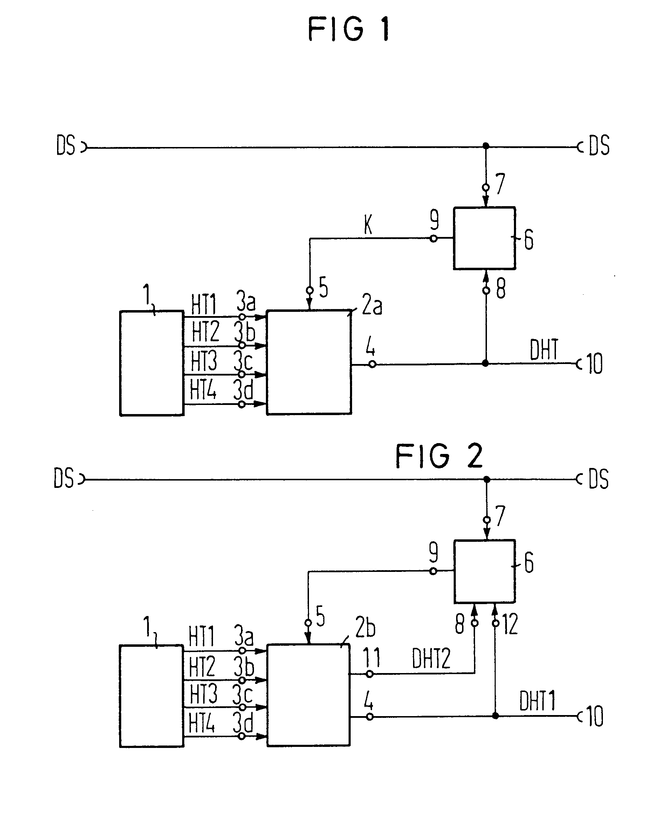

Fig. 1 zeigt eine bekannte Taktrückgewinnungseinrichtung zur Erzeugung eines Datenhilfstaktes DHT zu einem Digitalsignal DS. Die Anordnung enthält einen Hilfstakterzeuger 1, eine Phasenkorrektureinrichtung 2a und einen Phasensensor 6.

Vom Hilfstakterzeuger 1 werden an die Eingänge 3a - 3d der Phasenkorrektureinrichtung 2a Hilfstakte HT1 - HT4 angelegt, die die gleiche Frequenz aufweisen aber gegeneinander um jeweils 0,25 UI (Unit Interval) in der Phase verschoben sind. Die Hilfstakte HT1 - HT4 weisen eine Frequenz auf, die entweder etwas kleiner oder etwas größer als die Bitrate des Digitalsignals DS ist. Der Phasensensor 6 beobachtet, wie sich die ausgewählten wirksamen Flanken des Digitalsignals DS und des Datenhilfstaktes DHT gegeneinander verschieben. Bei Erreichen eines vorgegebenen Phasenabstands gibt der Phasensensor 6 an seinem Ausgang 9 ein Korrektursignal K ab, das der Phasenkorrektureinrichtung 2a zugeführt wird und diese veranlaßt, den nächsten der Hilfstakte HT1 - HT4 als Datenhilfstakt DHT zu seinem Ausgang 4 durchzuschalten.

Fig. 2 zeigt das Blockschaltbild einer erfindungsgemäßen Taktrückgewinnungseinrichtung. Diese unterscheidet sich von der bekannten dadurch, daß dem Phasensensor 6 nicht wie bisher lediglich der einzige Datenhilfstakt DHT sondern stattdessen ein erster Datenhilfstakt DHT1 und ein gegenüber diesem in der Phase um einen vorgegebenen Wert verschobener zweiter Datenhilfstakt DHT2 zugeführt werden, die von der Phasenkorrektureinrichtung 2b ausgewählt und geliefert werden. Hierbei benötigt der Phasensensor 6 im Gegensatz zum bekannten kein Verzögerungsglied, weil das Korrektursignal K dann ausgelöst wird, wenn die wirksamen Flanken des Digitalsignals DS und des Datenhilfstakts DHT2 in der Phasenlage gleich sind.

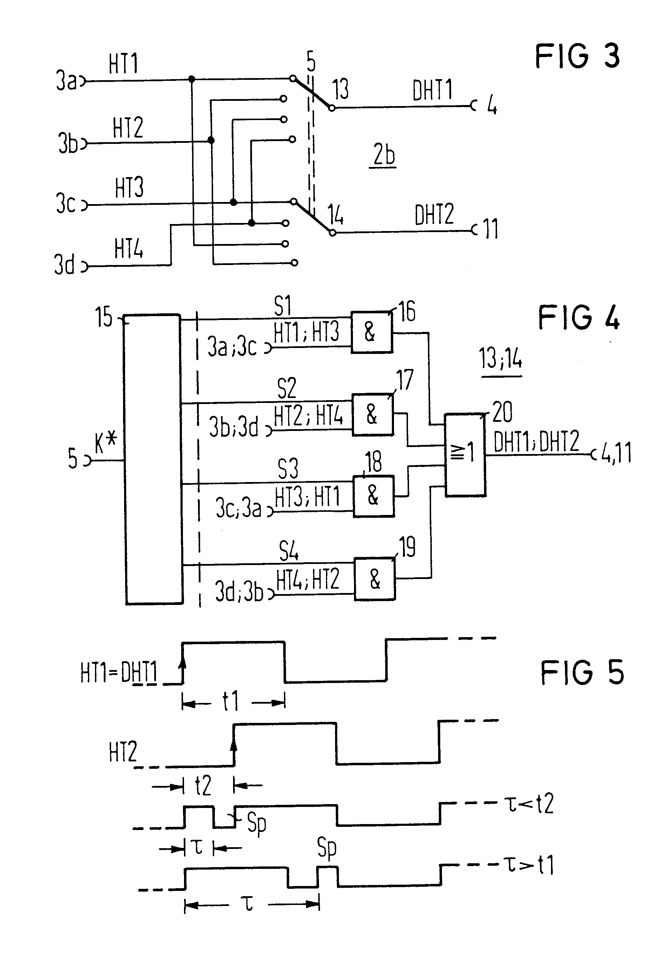

Fig. 3 zeigt eine Phasenkorrektureinrichtung 2b mit Umschaltern 13 und 14. Diese sind derart beschaltet, daß sich die Phasenlage des ersten Datenhilfstakts DHT1 in jeder Schaltstellung um 0,5 UI von der Phasenlage des zweiten Datenhilfstaktes DHT2 unterscheidet.

Fig. 4 zeigt eine Steuereinrichtung 15 und einen elektronischen Umschalter 16 bis 20. Dieser kann den mechanischen Umschalter 13 oder den mechanischen Umschalter 14 nach Fig. 3 ersetzen.

Die Steuereinrichtung 15 gibt vier Steuerbits S1 bis S4 ab. Diese bilden ein Codewort mit einem Zustand logisch ¨H¨ und drei Zuständen logisch ¨L¨. Tritt ein Impuls des asynchronen Korrektursignals K* am Eingang 5 auf, dann wird der Zustand logisch ¨H¨ weitergeschoben und es entsteht ein neues Codewort. Da dieses Korrektursignal K* vom Datenhilfstakt DHT2 nach einer Laufzeit durch die Steuereinrichtung 15 und den Phasensensor 1 ausgelöst wird, kommt eine asynchrone Umschaltung zustande.

Fig. 5 zeigt eine Umschaltung von dem als Datenhilfstakt DHT1 wirkenden Hilfstakt HT1 auf den Hilfstakt HT2. Ist die Laufzeit $\tau$ kleiner als der Zeitraum t1 aber größer als der Zeitraum t2, dann erfolgt die Umschaltung problemlos, weil sich die umzuschaltenden Impulse überlappen. Ist dies nicht der Fall, entstehen Spikes Sp, die Störungen hervorrufen können. Es ist daher besser, mit einem synchronen Korrektursignal K zu arbeiten.

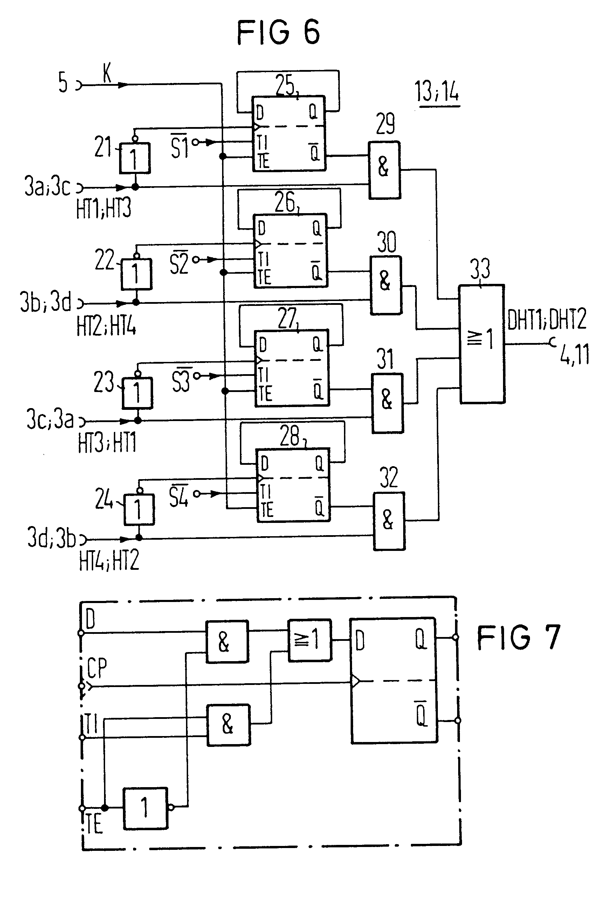

Fig. 6 zeigt einen elektronischen Umschalter der ebenfalls die Umschalter 13 und 14 nach Figur 3 ersetzen kann und mit einem synchronen Korrektursignal K arbeitet. Der Umschalter enthält Inverter 21 bis 24, D-Flipflops 25 bis 28 mit zusätzlichen Testeingängen, UND-Gatter 29 bis 32 und ein ODER-Gatter 33.

Die D-flipflops 25 bis 28 sind handelsüblich und entsprechend Figur 7 geschaltet. Liegt am Testfreigabeeingang TE ein Zustand logisch ¨L¨, dann arbeiten diese D-Flipflops wie ein übliches D-Flipflop. Ist der Zustand am Testfreigabeeingang TE dagegen logisch ¨H¨, dann wird vom D-Eingang auf den Testeingang TI umgeschaltet.

Solange das Korrektursignal K am Eingang 5 einen Zustand logisch "L" hat, sind die D-Eingänge der D-Flipflops 25 bis 28 aktiv. Durch deren Takteingänge werden in jeder Periode deren Ausgangszustände über die Inverter 2l bis 24 mit den Hilfstakten HT1 bis HT4 wiederholt eingelesen. Eine Änderung der Zustände der invertierten Steuerbits $\overline{S1}$ bis $\overline{S4}$ an den Testeingängen TI wird erst bei einer Änderung des Korrektursignals K auf den Zustand logisch "H¨ durch Umschalten der D-Eingänge der D-Flipflops 25 bis 28 auf die Testeingänge TI berücksichtigt. Sie wird entsprechend dem Phasenunterschied zwischen beispielsweise den benachbarten Phasen der Hilfstakte HT1 und HT2 verschoben und synchron zu diesen Phasen eingelesen. Die Weiterleitung der eingelesenen Zustände erfolgt über die UND-Gatter 29 bis 32 mit denselben Phasen eine halbe Periode später.

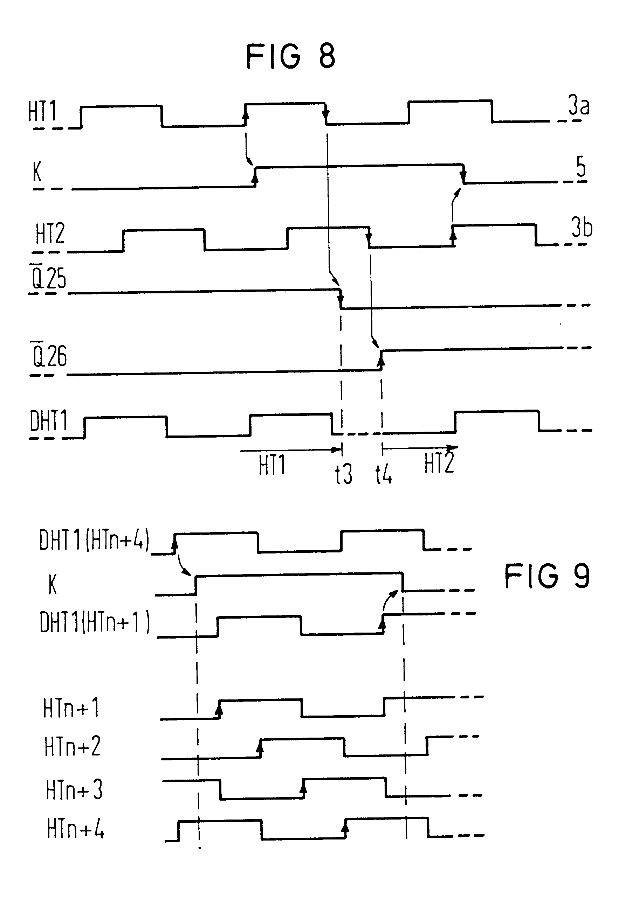

Fig. 8 zeigt eine Umschaltung von dem Hilfstakt HT1 auf den Hilfstakt HT2 beim Übergang des Korrektursignals K von dem Zustand logisch "L" auf dem Zustand logisch "H". Der Hilfstakt HTl schaltet sich mit seiner negativen Flanke über den $\overline{Q}$-Ausgang des D-Flipflops 25 ($\overline{Q}$25) aus. Der Hilfstakt HT2 schaltet sich mit seiner negativen Flanke über den $\overline{Q}$-Ausgang des D-Flipflops 26 ($\overline{Q}$26) ein. Im Zeitraum zwischen diesem Ab- und Einschalten zwischen t3 und t4 ist der Zustand des Datenhilfstaktes DHT1 kontinuierlich logisch "L" Dies bedeutet einen spikefreien Übergang. Für das Ab- und Einschalten steht jeweils die Zeit einer halben Periode (0,5 UI) zur Verfügung, so daß eine Realisierung des Umschalters in integrierter HCMOS-Technologie selbst bei einer Bitrate von 34 Mbit/s keine Schwierigkeit bedeutet.

Fig. 9 zeigt in einem Pulsplan einen Datenhilfstakt DHT1, der vor der Umschaltung der Hilfstakt HT1 war und nach der durch das Korrektursignal K ausgelösten Umschaltung der Hilfstakt HT2 wurde. War das Korrektursignal K synchron zum Datenhilfstakt DHT1, ist stets gewährleistet, daß alle Steuerbits $\overline{S1}$ bis $\overline{S4}$ eingelesen werden können, da die Impulsdauer des Korrektursignals K laufzeitunabhängig ist.

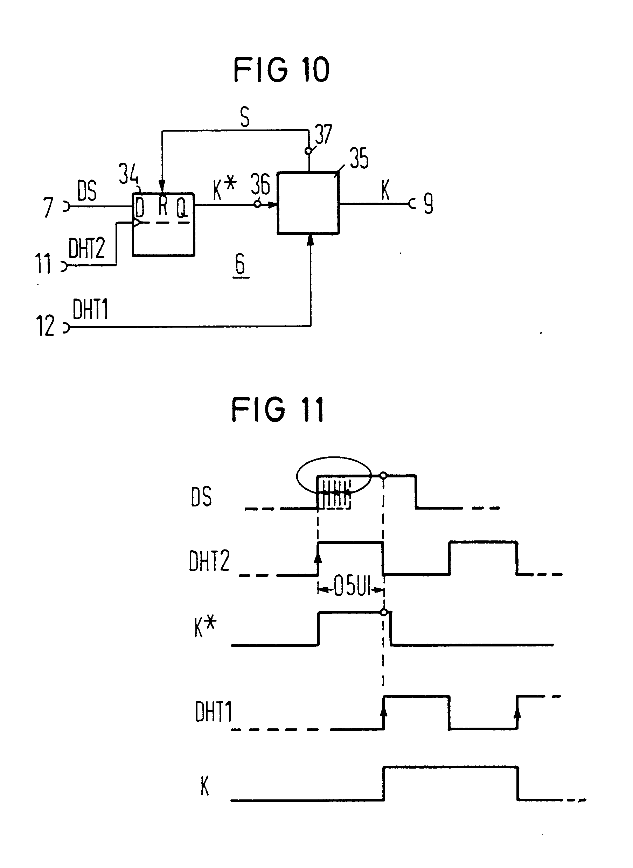

Fig. 10 zeigt einen Phasensensor 6 mit einem eingangsseitigen D-Flipflop 34 und einer nachgeschalteten Einrichtung 35 zur Erzeugung des zum ersten Datenhilfstakt DHT1 synchronen Korrektursignals K.

In Fig. 11 ist oben angedeutet, wie sich die vordere Flanke der Impulse des Digitalsignals DS am D-Eingang des D-Flipflops 34 von Taktperiode zu Taktperiode verschiebt bis die momentane, durch eine ausgezogene Linie dargestellte Phasenlage erreicht ist. Diese stimmt mit der Phasenlage der wirksamen, durch einen Pfeil angezeigten Flanke des Datenhilfstaktes DHT2 am Takteingang überein. Während des Datenhilfstakts DHT2 wird der Impuls des Digitalsignals DS an den Q-Ausgang als noch zum Datenhilfstakt DHT1 asynchrones Korrektursignal K* weitergegeben. Die Phasenlage der wirksamen, ebenfalls durch einen Pfeil markierten Flanke des Datenhilfstaktes DHT1 ist verabredungsgemäß demgegenüber um 0,5 UI verschoben. Mit diesem wird jetzt das synchrone Korrektursignal K im Korrektursignalerzeuger 35 gebildet. Das D-Flipflop 34 wird mit einem Sperrsignal S zurückgesetzt.

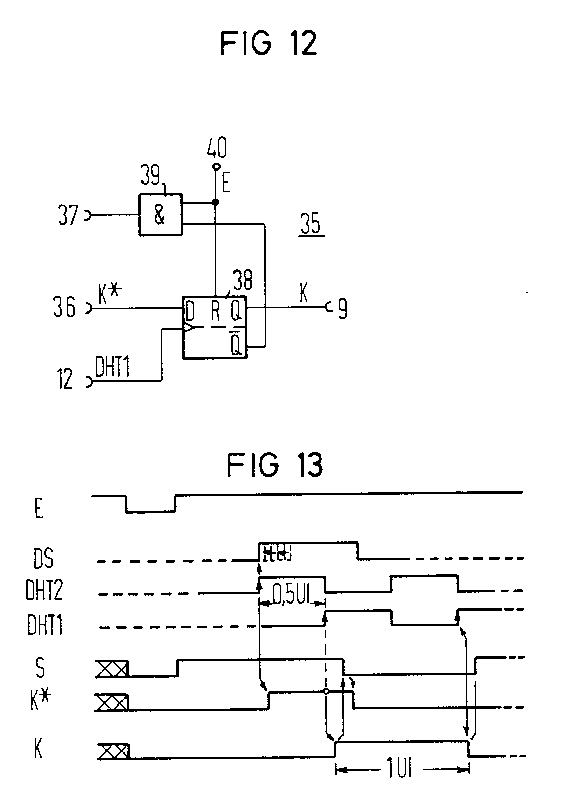

Fig. 12 zeigt den Korrektursignalerzeuger 35 detailliert. Er besteht aus einem D-Flipflop 38 und einem UND-Gatter 39. Fig. 13 zeigt den zu den Fig. 10 und 12 zugehörigen Pulsplan.

Ein Einstellsignal E am Eingang 40 bringt das D-Flipflop 38 am Q-Ausgang in einen Zustand logisch "L". Über das UND-Gatter 39 erhält auch der Q-Ausgang des D-Flipflops 34 den gleichen Zustand. Erreicht der Phasenabstand zwischen dem Digitalsignal DS und dem Datenhilfstakt DHT2 den Abstand Null, dann wird im D-Flipflop 34 vom D-Eingang zum Q-Ausgang ein Zustand logisch "H" eingeschrieben. Dies bedeutet den Beginn des asynchronen Korrektursignals K*. Durch den Datenhilfstakt DHT1 wird um 0,5 UI später im D-Flipflop 38 vom D-Eingang zum Q-Ausgang ein Zustand logisch "H" eingeschrieben und das synchrone Korrektursignal K beginnt. Gleichzeitig erlangt der $\overline{Q}$-Ausgang des D-Flipflops 38 einen Zustand logisch "L¨" was einen Zustand logisch "L" am Rücksetzeingang des D-Flipflops 34 bewirkt. Dieses wird zurückgesetzt und sein Q-Ausgang geht auf logisch "L". Dies bedeutet das Ende des Impulses des asynchronen Korrektursignals K*. Solange der Impuls des Korrektursignals K währt, bleibt das D-Flipflop 34 zurückgesetzt. Eine Periode des Datenhilfstakts DHT1 später wird durch diesen in den D-Eingang des D-Flipflops 38 ein Zustand logisch "L" eingelesen. Der Zustand an dessen Q-Ausgang geht auf logisch "L" und der Zustand am Rücksetzeingang des D-Flipflops 34 wieder auf logisch "H". Dieses kann jetzt wieder vom D-Eingang aus aktiviert werden.

**Patentansprüche**

1. Verfahren zur Erzeugung eines Korrektursignals (K) bei Erreichung eines definierten Phasenabstands zwischen einem Digitalsignal (DS) und einem ersten Datenhilfstakt (DHT1), der eine sich mit dem Phasenabstand ändernde Auswahl eines von mehreren Hilfstakten (HT1-HTm) darstellt, die untereinander einen gleichen Phasenabstand haben (m = ganze Zahl),
**dadurch gekennzeichnet,**
daß ein in der Phase um einen Bruchteil n/m der Periode des ersten Datenhilfstakts (DHT1) gegenüber diesem verschobener zweiter Datenhilfstakt (DHT2) gleicher Frequenz erzeugt wird, daß der Phasenabstand zwischen wirksamen Flanken der Impulse des Digitalsignals (DS) und des zweiten Datenhilfstakts (DHT2) gemessen wird (n = ganze Zahl, n <m) und daß bei Feststellung keines Phasenabstands das Korrektursignal (K) abgegeben wird.

2. Verfahren nach Anspruch 1,
**dadurch gekennzeichnet,**
daß als zweiter Datenhilfstakt (DHT2) einer der Hilfstakte (HT1-HTm) verwendet wird.

3. Verfahren nach Anspruch 2,
**dadurch gekennzeichnet,**
daß eine geradzahlige Anzahl m von Hilfstakten (HT1-HTm) verwendet wird und daß als zweiter Datenhilfstakt (DHT2) ein gegenüber dem ersten Datenhilfstakt (DHT1) um 0,5 UI (Unit Interval) in der Phase verschobener Hilfstakt (HT1-HTm) gewählt wird.

4. Anordnung zur Erzeugung eines Korrektursignals (K) bei Erreichung eines definierten Phasenabstands zwischen einem Digitalsignal (DS) und einem ersten Datenhilfstakt (DHT1) mit einem Hilfstakterzeuger (1), der m Hilfstakte (HT1-HTm) gleicher Frequenz und untereinander gleichem Phasenabstand erzeugt, mit einer Phasenkorrektureinrichtung, in der vom Korrektursignal (K) ein Hilfstakt als erster Datenhilfstakt (DHT1) ausgewählt wird, und mit einem Phasensensor (6), der bei Erreichen eines vorgegebenen Phasenabstands zwischen den wirksamen Flanken des Digitalsignals (DS) und des ersten Datenhilfstakts (DHT1) das Korrektursignal (K) abgibt,
**dadurch gekennzeichnet,**
daß die Phasenkorrektureinrichtung (2b) derart ausgebildet ist, daß ein in der Phase um einen Bruchteil n/m der Periode des ersten Datenhilfstakts (DHT1) gegenüber diesem verschobener zweiter Datenhilfstakt (DHT2) gleicher Frequenz erzeugt wird, und daß der Phasensensor (6) derart ausgebildet ist, daß der Phasenabstand zwischen wirksamen Flanken der Impulse des Digitalsignals (DS) und des zweiten Datenhilfstakts (DHT2) gemessen wird (n = ganze Zahl, n < m) und daß bei Feststellung keines Phasenabstands das Korrektursignal (K) abgegeben wird.

5. Anordnung nach Anspruch 4
**dadurch gekennzeichnet,**
daß als Phasensensor (6) ein erstes D-Flipflop (34), dessen D-Eingang als Eingang (7) für das Digitalsignal (DS) und dessen Takteingang als Eingang (11) für den zweiten Datenhilfstakt (DHT2) dient, und eine Einrichtung (35) zur Erzeugung des Korrektursignals (K) synchron zum ersten Datenhilfstakt (DHT1) vorgesehen sind,

deren erter Eingang mit dem Q-Ausgang und dessen Sperrsignalausgang mit dem Rücksetzeingang des ersten D-Flipflops (34) verbunden sind und dessen zweiter Eingang als Eingang (4) für den ersten Datenhilftakt (DHT1) und dessen Ausgang als Ausgang (9) für das Korrektursignal (K) dient.

6. Anordnung nach Anspruch 5,
**dadurch gekennzeichnet,**
daß die Einrichtung (35) zur Erzeugung des Korrektursignals (K) aus einem zweiten D-Flipflop (38), dessen D-Eingang mit dem Q-Ausgang des ersten D-Flipflops (34) und dessen Takteingang mit dem Eingang (12) für den ersten Datenhilftakt (DHT1) verbunden ist und dessen Q-Ausgang als Ausgnag (9) für das Korrektursignal (K) dient, und aus einem ersten UND-Gatter (39) besteht, dessen erster Eingang mit dem Q̄-Ausgnag des zweiten D-Flipflops (38), dessen zweiter Eingang mit dem Rücksetzeingang des zweiten D-Flipflops (38) sowie mit einem Eingang (21) für ein Einstellsignal (E) und dessen Ausgang (37) mit dem Rücksetzeingang des ersten D-Flipflops (34) verbunden ist.

7. Anordnung nach Anspruch 4,
**dadurch gekennzeichnet,**
daß als Phasenkorrektureinrichtung (2b) ein erster Umschalter (13) zur Auswahl eines der Hilfstakte (HT1) als ersten Datenhilfstakt (DHT1) und ein zweiter, mit dem ersten Umschalter (13) gekoppelter Umschalter (14) vorgesehen sind, der jeweils den Hilfstakt (HT3), der zum ersten Datenhilfstakt (DHT1) einen gewünschten Phasenabstand aufweist, als zweiten Datenhilfstakt (DHT2) auswählt.

8. Anordnung nach Anspruch 7,
**dadurch gekennzeichnet,**
daß als Umschalter (13, 14) elektronische Umschalter vorgesehen sind.

9. Anordnung nach Anspruch 8 mit einem Umschalter (13, 14),
**dadurch gekennzeichnet,**
daß für jeden Hilfstakt (HT1-HT4) ein D-Flipflop (25-28) mit Testeingang (TI) und Testfreigabeeingang (TE) vorgesehen ist, dessen Takteingang über eine Inverter (21-24) mit dem Eingang (3a-3d) für den Hilftakt (HT1-HT4), dessen Q-Ausgang mit dem D-Eingang, dessen TE-Eingang mit dem Eingang (5) für das synchrone Korrektursignal (K) und dessen TI-Ein

gang mit einer Steuereinrichtung (15) verbunden ist,
daß für jeden Hilfstakt (HT1-HT4) ein weiteres UND-Gatter (29-32) vorgesehen ist, dessen erster Eingang mit dem Q̄-Ausgang des D-Flipflops (25-28) mit Testeingang und Testfreigabeeingang und dessen zweiter Eingang mit dem Eingang (3a-3d) für den Hilfstakt (HT1-HT4) verbunden ist, und
daß ein ODER-Gatter (33) vorgesehen ist, dessen Eingänge jeweils mit dem Ausgang eines der weiteren UND-Gatter (29-32) verbunden sind und dessen Ausgang (41) der Abgabe des Datenhilfstaktes (DHT1, DHT2) dient.

10. Anordnung nach einem der Ansprüche 4 bis 9,
**gekennzeichnet durch,**
eine Realisierung in integrierter Schaltkreistechnik.

**Claims**

1. Method for generating a correction signal (K) when a defined phase interval is reached between a digital signal (DS) and a first auxiliary data clock (DHT1), which represents a selection, which changes with the phase interval, of one of a plurality of auxiliary clocks (HT1-HTm) that have the same phase interval with respect to each another (m = integer), characterised in that a second auxiliary data clock (DHT2) having the same frequency is generated which is shifted in phase with respect to the first auxiliary data clock (DHT1) by a fraction n/m of the period of the latter, in that the phase interval between active edges of the pulses of the digital signal (DS) and of the second auxiliary data clock (DHT2) is measured (n = integer, n < m), and in that the correction signal (K) is output if no phase interval is detected.

2. Method according to Claim 1, characterised in that one of the auxiliary clocks (HT1-HTm) is used as second auxiliary data clock (DHT2).

3. Method according to Claim 2, characterised in that an even number m of auxiliary clocks (HT1-HTm) is used, and in that an auxiliary clock (HT1-HTm) which is shifted in phase by 0.5 UI (unit interval) with respect to the first auxiliary data clock (DHT1) is selected as second auxiliary data clock (DHT2).

4. Arrangement for generating a correction signal (K) when a defined phase interval is reached between a digital signal (PS) and a first auxiliary data clock (DHT1), having an auxiliary clock generator (1) which generates m auxiliary clocks (HT1-HTm) with the same frequency and the same phase interval with respect to each other, having a phase correction device in which an auxiliary clock is selected as first auxiliary data clock (DHT1) by the correction signal (K), and having a phase sensor (6) which outputs the correction signal (K) when a defined phase interval is reached between the active edges of the digital signal (DS) and of the first auxiliary data clock (DHT1), characterised in that the phase correction device (2b) is designed in such a way that a second auxiliary data clock (DHT2) having the same frequency is generated which is shifted in phase with respect to the first auxiliary data clock (DHT1) by a fraction n/m of the period of the latter, and in that the phase sensor (6) is designed in such a way that the phase interval between active edges of the pulses of the digital signal (DS) and of the second auxiliary data clock (DHT2) is measured (n = integer, n < m), and that the correction signal (K) is output if no phase interval is detected.

5. Arrangement according to Claim 4, characterised in that a first D-type flipflop (34), the D input of which serves as input (7) for the digital signal (DS) and the clock input of which serves as input (11) for the second auxiliary data clock (DHT2), and a device (35) for generating the correction signal (K) synchronously with the first auxiliary data clock (DHT1) are provided as phase sensor (6), the first input of which device is connected to the Q output and the disable signal output of which is connected to the reset input of the first Dtype flipflop (34), and the second input of which serves as input (4) for the first auxiliary data clock (DHT1) and the output of which serves as output (9) for the correction signal (K).

6. Arrangement according to Claim 5, characterised in that the device (35) for generating the correction signal (K) consists of a second D-type flipflop (38), the D input of which is connected to the Q output of the first D-type flipflop (34) and the clock input of which is connected to the input (12) for the first auxiliary data clock (DHT1) and the Q output of which serves as output (9) for the correction signal (K), and of a first AND gate (39), the first input of which is connected to the $\overline{Q}$ output of the second D-type flipflop (38), the second input of which is connected to the reset input of the second D-type flipflop (38) and also to an input (21) for a setting signal (E), and the output (37) of which is connected to the reset input of the first D-type flipflop (34).

7. Arrangement according to Claim 4, characterised in that a first changeover switch (13) for selecting one of the auxiliary clocks (HT1) as first auxiliary data clock (DHT1) and a second changeover switch (14) coupled to the first changeover switch (13) are provided as phase correction device (2b), which changeover switch (14) selects in each case the auxiliary clock (HT3), which has a desired phase interval with respect to the first auxiliary data clock (DHT1), as second auxiliary data clock (DHT2).

8. Arrangement according to Claim 7, characterised in that electronic changeover switches are provided as changeover switches (13, 14).

9. Arrangement according to Claim 8 having a changeover switch (13, 14), characterised in that a Dtype flipflop (25-28) with test input (TI) and test enable input (TE) is provided for each auxiliary clock (HT1-HT4), the clock input of which D-type flipflop is connected via an inverter (21-24) to the input (3a-3d) for the auxiliary clock (HT1-HT4), the Q output of which is connected to the D input, the TE input of which is connected to the input (5) for the synchronous correction signal (K) and the TI input of which is connected to a control device (15), in that a further AND gate (29-32) is provided for each auxiliary clock (HT1-HT4), the first input of which AND gate is connected to the $\overline{Q}$ output of the D-type flipflop (25-28) with test input and test enable input, and the second input of which is connected to the input (3a-3d) for the auxiliary clock (HT1-HT4), and in that an OR gate (33) is provided, the inputs of which are connected in each case to the output of one of the further AND gates (29-32), and the output (41) of which serves for outputting the auxiliary data clock (DHT1, DHT2).

10. Arrangement according to one of Claims 4 to 9, characterised by a realisation in integrated circuit technology.

**Revendications**

1. Procédé pour produire un signal de correction (K) lorsqu'un écart de phase défini est atteint entre un signal numérique (DS) et une première cadence auxiliaire de données (DHT1), qui représente un choix, variable aved l'écart de phase, de l'une parmi plusieurs cadences auxiliaires (HT1-HTm), qui sont séparées les unes des autres d'un écart de phase identique (m = nombre entier), caractérisé par le fait

qu'une seconde cadence auxiliaire de données (DHT2), dont la phase est décalée d'une fraction n/m de la période de la première cadence auxiliaire de données (DHT1), par rapport à cette cadence et possède la même fréquence que l'écart de phase entre les flancs actifs des impulsions du signal numérique (DS) et de la seconde cadence auxiliaire de données (DHT2), est mesurée (n = nombre entier, n < m) et

que, lorsqu'il est établi qu'il n'existe aucun écart de phase, le signal de correction (K) est délivré.

2. Procédé suivant la revendication 1, caractérisé par le fait qu'on utilise comme seconde cadence auxiliaire de données (DHT2), l'une des cadences auxiliaires (HT1-HTm).

3. Procédé suivant la revendication 2, caractérisé par le fait

qu'on utilise un nombre pair m de cadences auxiliaires (HT1-HTm), et

qu'on choisit, comme seconde cadence auxiliaire de données (DHT2), une cadence auxiliaire (HT1-HTm) dont la phase est décalée de 0,5 UI (Unit Interval) par rapport à la première cadence auxiliaire (DHT1).

4. Dispositif pour produire un signal de correction (K) lorsqu'est atteint un écart de phase défini entre un signal numérique (DS) et une première cadence auxiliaire de données (DHT1), comportant

un générateur de cadences auxiliaires (1), qui produit m cadences auxiliaires (HT1-HTm) possédant la même fréquence et le même écart de phase réciproque,

un dispositif de correction de phase, dans lequel une cadence auxiliaire est sélectionnée comme première cadence auxiliaire de données (DHT), par le signal de correction (K), et

un détecteur de phase (6), qui délivre le signal de correction (K), lorsqu'est atteint un écart de phase prédéterminé entre les flancs actifs du signal numérique (DS) et de la première cadence auxiliaire de données (DHT),

caractérisé par le fait

que le dispositif de correction de phase (2b) et agencé de telle sorte qu'une seconde cadence auxiliaire (DHT2), dont la phase est décalée d'une fraction n/m de la période de la première cadence auxiliaire de données (DHT1) par rapport à cette cadence et possède la même fréquence, est produit, et

que le détecteur de phase (6) est agencé de telle sorte que l'écart de phase entre les flancs actifs des impulsions du signal numérique (DS) et de la seconde cadence auxiliaire de données (DHT2) est mesurée (n = nombre entier, n < m) et que dans le cas où aucun écart de phase n'est détecté, le signal de correction (K) est délivré.

5. Dispositif suivant la revendication 4, caractérisé par le fait

qu'on utilise comme détecteur de phase (6) une première bascule bistable de type D (34), dont l'entrée (D) est utilisée comme entrée (7) pour Le signal numérique (DS) et dont l'entrée de cadence est utilisée comme entrée (11) pour la seconde cadence auxiliaire de données (DHT2), et qu'il est prévu un dispositif (35) pour produire le signal de correction (K) en synchronisme avec la première cadence auxiliaire de données (DHT),

dont la première entrée est raccordée à la sortie Q et dont la sortie du signal de blocage est raccordée à l'entrée de remise à l'état initial de la première bascule bistable de type P (34) et dont la seconde entrée est utilisée comme entrée (4) pour la première cadence auxiliaire de données (DHT1) et dont la sortie est utilisée en tant que sortie pour le signal de correction (K).

6. Dispositif selon la revendication 5, caractérisé par le fait

que le dispositif (35) servant à produire le signal de correction (K) est constitué par une seconde bascule bistable de type D (38), dont l'entrée (D) est raccordée à la sortie Q de la première bascule bistable de type D (34) et dont l'entrée de cadence est raccordée à l'entrée (12) pour la première cadence auxiliaire de données (DHT1) et dont la sortie Q est utilisée comme sortie (9) pour le signal de correction (K), et par une première porte ET (39), dont la première entrée est raccordée à la sortie $\overline{Q}$ de la seconde bascule bistable de type D (38), dont la seconde entrée est raccordée à l'entrée de remise à l'état initial de la seconde bascule bistable de type D (38) et à une entrée (21) pour un signal de réglage (E) et dont la sortie (37) est raccordée à l'entrée de remise à l'état initial de la première bascule bistable de type D (34).

7. Dispositif selon la revendication 4, caractérisé en ce qu'il est prévu, comme dispositif de correction de phase (2b), un premier commutateur (13) servant à sélectionner l'une des cadences auxiliaires (HT1) en tant que première cadence auxiliaire de données (DHT1) et un second commutateur (14) accouplé au premier commutateur (13) et qui sélectionne en tant que seconde cadence auxiliaire de données (DHT2), respectivement la cadence auxiliaire (HT3) qui possède un écart de phase désiré par rapport à la première cadence auxiliaire de données (DHT1).

8. Dispositif suivant la revendication 7, caractérisé par le fait qu'il est prévu, en tant que commutateurs (13,14), des commutateurs électroniques.

9. Dispositif suivant la revendication 8 comportant un commutateur (13,14), caractérisé par le fait que pour chaque cadence auxiliaire (NT1-HT4), il est prévu une bascule bistable de type D (25-28) possédant une entrée de test (TI) et une entrée d'autorisation de test (TE), dont l'entrée de cadence est raccordée par l'intermédiaire d'un inverseur (21-24) à l'entrée (3a-3d) pour la cadence auxiliaire (HT1-HT4), dont la sortie Q est raccordée à l'entrée D, dont l'entrée TE est raccordée à l'entrée (5) pour le signal de correction synchrone (K) et dont l'entrée (TI) est raccordée à un dispositif de commande (15),
que pour chaque cadence auxiliaire (HT1-HT4), il est prévu une seconde porte ET (29-32), dont la première entrée est raccordée à la sortie $\overline{Q}$ de la bascule bistable de type (25-28) comportant l'entrée de test et l'entrée d'autorisation de test, et dont la seconde entrée est raccordée à l'entrée (3a-3d) pour la cadence auxiliaire (HT1-KT4), et
qu'il est prévu une porte OU (33), dont les entrées sont raccordées respectivement à la sortie de l'une des autres portes ET (29-32) et dont la sortie (41) est utilisée pour la délivrance de la cadence auxiliaire de données (DHT1, DHT2).

10. Dispositif selon l'une des revendications 4 à 9, caractérisé par une réalisation selon la technique des circuits intégrés.

## FIG 1

## FIG 2

FIG 3

3a ⟩ HT1

5
13          DHT1          ⟨ 4

2b

3b ⟩ HT2

3c ⟩ HT3

14          DHT2          ⟨ 11

3d ⟩ HT4

FIG 4

15

S1
HT1;HT3
3a;3c ⟩         &   16

13;14

S2
HT2;HT4
3b;3d ⟩         &   17

5 ⟩ K*

≧1   20
DHT1;DHT2   ⟨ 4,11

S3
HT3;HT1
3c;3a ⟩         &   18

S4
HT4;HT2
3d;3b ⟩         &   19

FIG 5

HT1=DHT1

|← t1 →|

HT2

|→ t2 |←

Sp                τ<t2

|→ τ |←

Sp

|←   τ   →|        τ>t1

# FIG 6

# FIG 7

EP 0 313 953 B1

# FIG 8

# FIG 9

12

# FIG 10

# FIG 11

# FIG 12

# FIG 13